# EUROPÄISCHE PATENTANMELDUNG

(11) **EP 4 773 055 A1**
(43) Veröffentlichungstag der Anmeldung: **08.07.2026**
(21) Anmeldenummer: 25221052.1
(22) Anmeldetag: 05.12.2025
(51) Int. Cl.: G06Q 10/0833, G06Q 10/087, H04W 4/80

(54) **LAGERBEHÄLTER ZUM LAGERN VON LEBENSMITTELN, VERFAHREN UND VORRICHTUNG ZUM BETREIBEN EINES LAGERBEHÄLTERS UND SYSTEM**

(30) Priorität: 07.01.2025 BE 202500002
(71) Anmelder: Miele & Cie. KG, 33332 Gütersloh (DE)
(72) Erfinder: Westergerling, Mario, 33334 Gütersloh (DE); Franzmeier, Jens, 32052 Herford (DE); Koch, Daniel, 32120 Hiddenhausen (DE); Schmelter, Stefan, 33330 Gütersloh (DE)

(57) **Zusammenfassung**

Die Erfindung betrifft einen Lagerbehälter (100) zum Lagern von Lebensmitteln. Der Lagerbehälter (100) weist eine Speichereinrichtung (115) zum Speichern einer Standortinformation des Lagerbehälters (100) und eine Kommunikationseinrichtung (120) auf. Die Kommunikationseinrichtung (120) ist ausgebildet, um eine Funkverbindung mit mindestens einem mobilen Endgerät (125) aufzubauen, um die in der Speichereinrichtung (115) gespeicherte Standortinformation des Lagerbehälters (100) an das mobile Endgerät (125) auszugeben und/oder um eine aktuelle Standortinformation von dem mobilen Endgerät (125) zu empfangen und in der Speichereinrichtung (115) abzuspeichern.

## Beschreibung

Die Erfindung betrifft einen Lagerbehälter zum Lagern von Lebensmitteln, ein Verfahren und eine Vorrichtung zum Betreiben eines Lagerbehälters und ein System.

Lagerbehälter können mit einem QR-Code versehen sein, mit dem der Endnutzer hinterlegen kann, wann und was er in den Lagerbehälter, der auch als Vorratsbehälter bezeichnet werden kann, eingefüllt hat. Durch die Anbindung an eine App kann der Nutzer dann über die Haltbarkeit des Lebensmittels informiert werden

Der hier vorgestellte Ansatz stellt sich die Aufgabe, einen verbesserten Lagerbehälter zum Lagern von Lebensmitteln, ein verbessertes Verfahren und eine verbesserte Vorrichtung zum Betreiben eines Lagerbehälters und ein verbessertes System zu schaffen.

Erfindungsgemäß wird diese Aufgabe durch einen Lagerbehälter zum Lagern von Lebensmitteln, ein Verfahren und eine Vorrichtung zum Betreiben eines Lagerbehälters und ein System mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass sich einfach nachvollziehen lässt, wo sich ein Lagerbehälter gerade befindet.

Ein Lagerbehälter zum Lagern von Lebensmitteln weist eine Speichereinrichtung zum Speichern einer Standortinformation des Lagerbehälters und eine Kommunikationseinrichtung auf. Die Kommunikationseinrichtung ist ausgebildet, um eine Funkverbindung mit mindestens einem mobilen Endgerät aufzubauen, um die Standortinformation zwischen der Speichereinrichtung und dem mobilen Endgerät zu übertragen.

Bei dem Lagerbehälter kann es sich beispielsweise um einen widerverwendbaren Lagerbehälter, der auch als Lebensmittelbehälter bezeichnet werden kann, handeln. Der Lagerbehälter kann für den Transport von Lebensmitteln an Freunde, Bekannte oder Verwandte ausgeliehen werden. Dabei kann der Entleiher jedoch mit der Situation konfrontiert, dass er den ausgeliehenen Lagerbehälter, der auch als Transportbox bezeichnet werden kann, nicht mehr zuordnen kann. Der Lagerbehälter verbleibt dann beim Entleiher oder der Lagerbehälter wird irrtümlich an eine falsche Person zurückgegeben. Andernfalls kann es passieren, dass die Ausleihe des Lagerbehälters in Vergessenheit gerät, so dass der Entleiher den Lagerbehälter unbeabsichtigt in seinen Bestand aufnimmt. Außerdem können Lagerbehälter in Rucksäcken zurückgelassen oder an anderen Orten vergessen werden. Das Wiederauffinden der Lagerbehälter kann sich als zeitaufwändig und schwierig erweisen.

Mit dem hier vorgestellten Ansatz kann ein Lagerbehälter geschaffen werden, dem sein Standort bekannt ist, sodass der Lagerbehälter unterscheiden kann, ob er sich im eigenen Haushalt oder in einem fremden Haushalt befindet. Der hier vorgestellte Ansatz kann daher auch als intelligenter Lagerbehälter mit Haushaltsbindung und Differenzierung verstanden werden. Der Lagerbehälter kann also einem Haushalt mit entsprechender Adresse zugeordnet werden, wobei die Position des Lagerbehälters mittels integrierter UWB-Technik (Ultra-Breitband-Technik) und UWB-fähigem Smartphone und dessen Ortung bestimmt und hinterlegt werden kann.

Der Lagerbehälter kann eine Energiequelle zum Bereitstellen elektrischer Energie zum Betreiben der Speichereinrichtung aufweisen. Somit können die Standortinformationen des Lagerbehälters zuverlässig gespeichert werden.

Der Lagerbehälter kann einen Behälter mit einem Innenraum zum Aufnehmen von Lebensmitteln und einen Deckel zum Verschließen des Innenraums aufweisen. Die Kommunikationseinrichtung und/oder die Speichereinrichtung können platzsparend im Behälter oder Deckel des Lagerbehälters angeordnet sein.

Die Kommunikationseinrichtung kann UWB-fähig ausgebildet sein. Auf diese Weise kann die Standortinformation des Lagerbehälters mit einer gängigen Technologie übertragen werden. Optional kann der Standort unter Verwendung der UWB-Technologie zentimetergenau erfasst und in Form der Standortinformation ausgegeben und/oder gespeichert werden. Alternativ kann eine andere geeignete Technologie zum Herstellen einer drahtlosen Kommunikationsverbindung verwendet werden.

Ein Verfahren ist zum Betreiben einer Ausführungsform eines hierin genannten Lagerbehälters vorgesehen, wobei der Lagerbehälter drahtlos mit mindestens einem mobilen Endgerät koppelbar ist. Das Verfahren umfasst einen Schritt des Aufbauens der Funkverbindung zwischen dem mobilen Endgerät und dem Lagerbehälter sowie einen Schritt des Bestimmens der aktuellen Standortinformation durch das mobile Endgerät und einen Schritt des Übermittelns der aktuellen Standortinformation über die Funkverbindung zu dem Lagerbehälter. Bei dem mobilen Endgerät kann es sich beispielsweise um ein Smartphone handeln.

Das Verfahren kann einen Schritt des Übertragens der aktuellen Standortinformation an eine externe Zentraleinrichtung umfassen. Bei der externen Zentraleinrichtung kann es sich beispielsweise um eine Cloud handeln. Die aktuelle Standortinformation kann in der externen Zentraleinrichtung hinterlegt werden.

Das Verfahren kann einen Schritt des Vergleichens der aktuellen Standortinformation mit einem Heimatstandort des Lagerbehälters umfassen. Der Schritt des Vergleichens kann ausgeführt werden, um eine Übereinstimmung zwischen der aktuellen Standortinformation und dem Heimatstandort oder eine Abweichung zwischen der aktuellen Standortinformation und dem Heimatstandort zu ermitteln. Der Lagerbehälter kann somit einfach und schnell gefunden werden.

Das Verfahren kann einen Schritt des Ausgebens einer Benachrichtigung an ein einem Verleiher des Lagerbehälters zugeordneten Gerät umfassen. Der Schritt des Ausgebens kann ausgeführt werden, wenn im Schritt des Vergleichens die Abweichung zwischen der aktuellen Standortinformation und dem Heimatstandort ermittelt wurde. Der Verleiher kann mittels der Benachrichtigung den aktuellen Standort des Lagerbehälters erfahren.

Das Verfahren kann einen Schritt des Ausgebens einer Benachrichtigung an ein einem Entleiher des Lagerbehälters zugeordneten Gerät umfassen. Der Schritt des Ausgebens kann ausgeführt werden, wenn im Schritt des Vergleichens die Abweichung zwischen der aktuellen Standortinformation und dem Heimatstandort ermittelt wurde. Der Entleiher kann somit darüber informiert werden, dass sich ein fremder Lagerbehälter in seinem Bestand befindet.

Der Schritt des Ausgebens kann ausgeführt werden, wenn die Abweichung zwischen der aktuellen Standortinformation und dem Heimatstandort für die Dauer eines vordefinierten Zeitraums vorliegt.

Das Verfahren kann einen Schritt des Ortens des Lagerbehälters unter Verwendung der Funkverbindung umfassen. Auf diese Weise kann der Lagerbehälter zentimetergenau geortet werden. Beispielsweise auch im eigenen Haushalt, wenn der Lagerbehälter beispielsweise in einem Rucksack vergessen wurde.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Ein System weist eine Ausführungsform einer hierin genannten Vorrichtung und eine Mehrzahl von Ausführungsformen des hierin genannten Lagerbehälters auf.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Lagerbehälters;
- Figur 2: eine schematische Darstellung eines Ausführungsbeispiels eines Lagerbehälters;
- Figur 3: ein Ablaufdiagramm eines Ausführungsbeispiels eines Verfahrens zum Betreiben eines Lagerbehälters; und
- Figur 4: ein Blockschaltbild eines Ausführungsbeispiels einer Vorrichtung zum Betreiben eines Lagerbehälters.

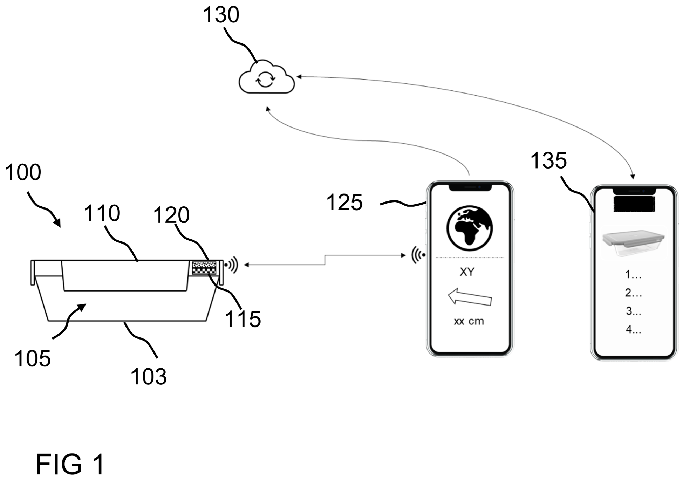

Figur 1 zeigt eine schematische Darstellung eines Ausführungsbeispiels eines Lagerbehälters 100. Der Lagerbehälter 100 ist zum Lagern von Lebensmitteln ausgebildet und weist beispielsweise einen Behälter 103 auf, der einen Innenraum 105 ausformt, in den die Lebensmittel eingelegt werden können. Optional weist der Lagerbehälter 100 einen den Innenraum 105 verschließenden Deckel 110 auf. Der Lagerbehälter 100 ist beispielsweise als eine Kunststoffbox für den Heimbedarf ausgelegt. Auch kann der Lagerbehälter 100 gewerblich genutzt werden, beispielsweise von einem Essenlieferanten oder einem Lebensmittelhändler. Ferner weist der Lagerbehälter 100 eine Speichereinrichtung 115 und eine Kommunikationseinrichtung 120 auf. Lediglich beispielhaft sind die Speichereinrichtung 115 und die Kommunikationseinrichtung 120 in dem Deckel 110 angeordnet. Alternativ ist zumindest eine der Einrichtungen 115, 120 in dem Behälter angeordnet.

Der Lagerbehälter 100 ist im Zusammenhang mit mindestens einem mobilen Endgerät 125 und/oder einer externen Zentraleinrichtung 130 betreibbar. Hierzu ist die Speichereinrichtung 115 zum Speichern einer Standortinformation des Lagerbehälters 100 ausgebildet. Die Kommunikationseinrichtung 120 ist ausgebildet, um eine Funkverbindung mit mindestens einem mobilen Endgerät 125 aufzubauen, um eine Datenübertragung zwischen dem Lagerbehälter 100 und dem mobilen Endgerät 125 zu ermöglichen. Dadurch kann beispielsweise die Standortinformation aus der Speichereinrichtung 115 ausgelesen und an das mobilen Endgerät 125 übermittelt werden oder es kann eine Standortinformation von dem mobilen Endgerät 125 empfangen und in der abgespeichert werden. Somit wird die Kommunikationseinrichtung 120 beispielsweise verwendet, um die in der Speichereinrichtung 115 gespeicherte Standortinformation des Lagerbehälters 100 an das mobile Endgerät 125 auszugeben und/oder um eine aktuelle Standortinformation von dem mobilen Endgerät 125 zu empfangen und in der Speichereinrichtung 115 abzuspeichern.

Gemäß einem Ausführungsbeispiel ist die Speichereinrichtung 115 ausgebildet, um sowohl eine feste Standortinformation zu speichern, die einen Heimatstandort des Lagerbehälters 100 repräsentiert, als auch eine veränderliche Standortinformation zu speichern, die einen aktuellen Standort des Lagerbehälters 100 repräsentiert.

Gemäß einem Ausführungsbeispiel weist der der Lagerbehälter 100 eine Energiequelle zum Bereitstellen elektrischer Energie zum Betreiben der Speichereinrichtung 115 auf. Die Energiequelle ist beispielsweise als Batterie, Akku oder Kondensator ausgeführt. Optional umfasst der Lagerbehälter 100 eine Einrichtung zur Energiegewinnung, um die Energiequelle autark aufladen zu können. Optional ist die Kommunikationseinrichtung 120 UWB-fähig ausgebildet.

Das mobile Endgerät 125 ist signalübertragungsfähig mit einer externen Zentraleinrichtung 130 koppelbar. Bei der externen Zentraleinrichtung 130 handelt es sich beispielsweise um eine Cloud und bei dem mobilen Endgerät 125 um ein Smartphone. Lediglich beispielhaft ist ein weiteres mobiles Endgerät 135 dargestellt, das ebenfalls mit der externen Zentraleinrichtung 130 koppelbar ist. Beispielsweise gehört das mobile Endgerät 125 einem Verleiher und das mobile Endgerät 135 gehört einem Entleiher oder ebenfalls dem Verleiher. Beispielsweise repräsentieren die mobilen Endgerät 125, 135 dasselbe mobile Endgerät, lediglich mit einer unterschiedlichen Anzeige.

Gemäß einem Ausführungsbeispiel wird dem Lagerbehälter 100 zunächst ein Heimatstandort zugeordnet, indem die Speichereinrichtung 115 die Standortinformation als Heimatstandort des Lagerbehälters 100 speichert. Dieser Heimatstandort wird beispielsweise über das mobile Endgerät 125 abgerufen und in der externen Zentraleinrichtung 130 gespeichert.

Mittels des mobilen Endgeräts 125 ist die aktuelle Standortinformation des Lagerbehälters 100 abrufbar. Ein Nutzer ist somit in der Lage den Lagerbehälter 100 zu orten, beispielsweise auch zentimetergenau, da die Kommunikationseinrichtung 120 UWB-fähig ist und eine UWB-Kommunikation sowie eine UWB-Ortung zwischen dem Lagerbehälter 100 und dem mobilen Endgerät 125 ausgebildet ist. Das mobile Endgerät 125 ist ausgebildet, um den Lagerbehälter 100 mittels UWB-Technologie zu orten und die GPS-Position des Lagerbehälters 100 zu erfassen. Zudem ist das mobile Endgerät 125 ausgebildet, um die Standortinformation für den Lagerbehälter 100 an die externen Zentraleinrichtung 130 zu übermitteln.

Das mobile Endgerät 135 ist ausgebildet, um die Standortinformation des Lagerbehälters 100 von der externen Zentraleinrichtung 130 zu empfangen und an die externe Zentraleinrichtung 130 auszugeben. Beispielsweise weist das mobile Endgerät 135 eine App auf, in der der Nutzer eine Mehrzahl von Lagerbehältern 100 verwaltet sowie eine Position des Lagerbehälters 100 bestimmt und/oder abruft.

In anderen Worten ausgedrückt ist der Lagerbehälter 100 mit einer UWB-Technologie ausgestattet. Mittels UWB-fähigem mobilen Endgerät 125, 135, dem Lagerbehälter 100 mit UWB-Technologie und einer App wird der Lagerbehälter 100 in der App und/oder in der externen Zentraleinrichtung 130 registriert. Bei der Registrierung des Lagerbehälters 100 wird dem Lagerbehälter 100 eine Wohnadresse, Heimatadresse, als auch weitere persönliche Daten zugeordnet. Die aktuelle Position, Adresse, wird mittels des mobilen Endgeräts 125 ermittelt und als aktuelle Position in der externen Zentraleinrichtung 130 sowie im Lagerbehälter 100 hinterlegt. In der App entsteht so ein Lagercontainer Lagerverwaltung inklusive aktuellem Lagercontainerstandort, Adresse. Wird nun ein Lagerbehälter 100 an Freunde, Bekannte Verwandte ausgeliehen, so ändert sich der Standort, Adresse, des Lagerbehälters 100. Der aktuelle Standort, Adresse, des Lagerbehälters 100 wird über das im Lagerbehälter 100 integrierte UWB und die Verbindung zu einem UWB-fähigen mobilen Endgerät 125, 135 ermittelt, wodurch der Standort des Lagerbehälters 100 bestimmt wird. Die neue Position des Lagerbehälters 100 wird über das UWB-fähige mobile Endgerät 125, 135 an die externe Zentraleinrichtung 130 übermittelt. Weicht der Standort des Lagerbehälters 100 über einen bestimmten Zeitraum ab, wird der Besitzer über die App benachrichtigt und der aktuelle Standort des Lagerbehälters 100angezeigt. Zusätzlich erhält der Entleiher eine Information, wenn sich ein UWB-fähiges Endgerät in der Nähe des Lagerbehälters 100 befindet, zum Beispiel Smartwatch, Smartphone etc. Mittels einer Push-Nachricht wird der Nutzer darauf hingewiesen, dass sich ein fremder Lagerbehälter 100 in seinem Bestand befindet und er diesen bitte zurückgeben soll. Die Rückgabemahnung kann vom Verleiher / Entleiher zurückgesetzt werden, entweder mit einem fest hinterlegten Zeitwert oder mit einem variablen Zeitwert, bis eine erneute Erinnerung erfolgt. Ein weiterer Einsatz der UWB-Technologie ergibt sich bei der exakten Ortung der Lagerbehälter 100. Beispielsweise wurde der Lagerbehälter 100 für eine Wanderung im Rucksack mitgenommen, bei der Rückkehr an die Wohnadresse, Heimatadresse, wurde der Lagerbehälter 100 jedoch im Rucksack vergessen. Mit einem UWB-fähigen mobilen Endgerät 125, 135 ist der Lagerbehälter 100 nun sowohl richtungsabhängig als auch zentimetergenau ortbar.

Mit dem hier vorgestellten Ansatz ist eine automatische Standortbestimmung des Lagerbehälters 100 möglich, wobei der Standort immer dann im Hintergrund aktualisiert wird, wenn sich ein UWB-fähiges mobiles Endgerät 125, 135 in der Nähe des Lagerbehälters 100 befindet und dieses mobile Endgerät 125, 135 dann automatisch die Position in der App bzw. der externen Zentraleinrichtung 130 hinterlegt. Mit Hilfe des im Lagerbehälter 100 integrierten UWB und eines UWB-fähigen Mobiltelefons kann die aktuelle Position, Adresse, seitens des mobilen Endgeräts 125, 135 ermittelt werden und an die externe Zentraleinrichtung 130 übermittelt werden. Daraus ergibt sich der Vorteil der Ermittlung der aktuellen Position des Lagerbehälters 100. Weicht die Position des definierten Haushalts ab, wird eine Nachricht an den Eigentümer gesendet, die auf das Fehlen eines Lagerbehälters 100 hinweist. Weicht die Adresse vom Bestimmungsort ab und befindet sich ein UWB-fähiges Endgerät in der Nähe des Lagerbehälters, zum Beispiel Smartwatch / Smartphone etc., so wird auch über dieses eine Nachricht zur Rückgabe des Lagerbehälters 100 ausgegeben. Eine Ortung des Lagebehälters 100 ist somit mittels UWB-fähigem Endgerät, richtungsabhängig und zentimetergenau möglich, beispielsweise ist der Lagerbehälter 100 in einem Rucksack auffindbar. Eine Lagerbehälterverwaltung ist in der App inklusive aktuellem Lagercontainerstandort, Adresse, möglich.

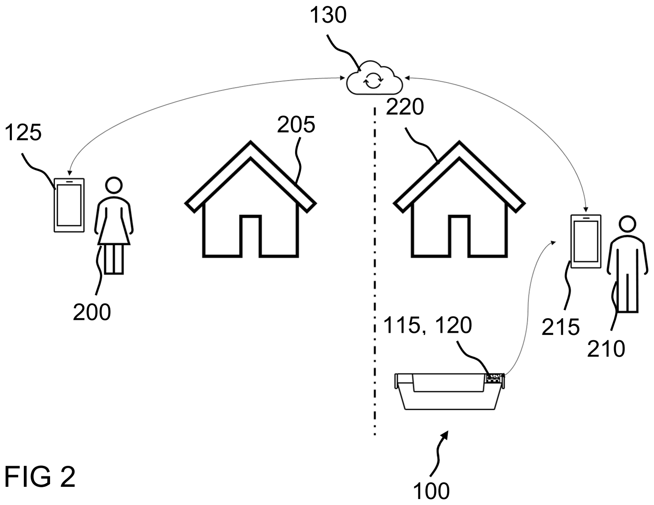

Figur 2 zeigt eine schematische Darstellung eines Ausführungsbeispiels eines Lagerbehälters 100. Dabei ähnelt oder entspricht der Lagerbehälter 100 dem Lagerbehälter aus einer der vorstehend beschriebenen Figuren.

Gezeigt ist lediglich beispielhaft ein Verleiher 200 sowie das mobile Endgerät 125 und ein Heimatstandort 205 des Lagerbehälters 100. Bei dem Heimatstandort 205 handelt es sich beispielsweise um die für den Lagerbehälter 100 registrierte Haushaltsadresse.

Zusätzlich ist ein Entleiher 210 mit einem mobilen Endgerät 215 gezeigt, wobei sich der Lagerbehälter 100 bei dem Entleiher an einem Fremdstandort 220, der auch als Fremdhaushalt bezeichnet werden kann, befindet. Gemäß einem Ausführungsbeispiel hat der Verleiher 200 dem Entleiher 210 den Lagerbehälter 100 ausgeliehen.

Über das mobile Endgerät 125 kann der Verleiher 200 seinen Lagerbehälter 100 orten, indem der aktuelle Standort des Lagerbehälters 100 von der externen Zentraleinrichtung 130 an das mobile Endgerät 125 ausgegeben wird. Alternativ erhält der Verleiher 200 eine Mitteilung auf dem mobilen Endgerät 215, dass der Lagerbehälter 100 am Heimatstandort 205 fehlt.

Der Lagerbehälter 100 vergleicht beispielsweise die aktuelle Standortinformation mit dem Heimatstandort 205 des Lagerbehälters 100. Hierbei wird eine Abweichung zwischen der aktuellen Standortinformation und dem Heimatstandort 205 ermittelt. Aufgrund der Abweichung erfolgt beispielsweise eine Pushnachrichtenausgabe an das mobile Endgerät 215, die den Entleiher 210 darüber informiert, dass sich der Lagerbehälter 100 fälschlicherweise in seinem Bestand befindet und/oder dass der Entleiher 210 den Lagerbehälter 100 an den Verleiher 200 zurückgeben soll.

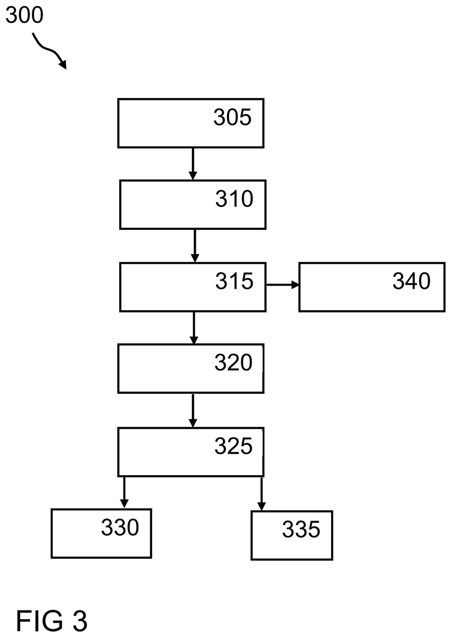

Figur 3 zeigt ein Ablaufdiagramm eines Ausführungsbeispiels eines Verfahrens 300 zum Betreiben eines Lagerbehälters. Dabei ähnelt oder entspricht der Lagerbehälter dem Lagerbehälter aus einer der vorstehend beschriebenen Figuren.

Das Verfahren 300 umfasst einen Schritt 305 des Aufbauens, einen Schritt 310 des Bestimmens und einen Schritt 315 des Übermittelns. Im Schritt 305 des Aufbauens wird eine Funkverbindung zwischen dem mobilen Endgerät und dem Lagerbehälter aufgebaut. Im Schritt 310 des Bestimmens wird eine aktuelle Standortinformation durch das mobile Endgerät bestimmt. Im Schritt 315 des Übermittelns wird die aktuelle Standortinformation über die Funkverbindung zu dem Lagerbehälter übermittelt.

Das Verfahren 300 umfasst gemäß einem Ausführungsbeispiel einen Schritt 320 des Übertragens der aktuellen Standortinformation an eine externe Zentraleinrichtung.

Gemäß einem weiteren Ausführungsbeispiel umfasst das Verfahren 300 einen Schritt 325 des Vergleichens der aktuellen Standortinformation mit einem Heimatstandort des Lagerbehälters, um eine Übereinstimmung zwischen der aktuellen Standortinformation und dem Heimatstandort oder eine Abweichung zwischen der aktuellen Standortinformation und dem Heimatstandort zu ermitteln.

Gemäß einem weiteren Ausführungsbeispiel umfasst das Verfahren 300 einen Schritt 330 des Ausgebens einer Benachrichtigung an ein einem Verleiher des Lagerbehälters zugeordneten Gerät, wenn im Schritt 325 des Vergleichens die Abweichung zwischen der aktuellen Standortinformation und dem Heimatstandort ermittelt wurde.

Gemäß einem weiteren Ausführungsbeispiel umfasst das Verfahren 300 einen Schritt 335 des Ausgebens einer Benachrichtigung an ein einem Entleiher des Lagerbehälters zugeordneten Gerät, wenn im Schritt 325 des Vergleichens die Abweichung zwischen der aktuellen Standortinformation und dem Heimatstandort ermittelt wurde.

Der Schritt 330, 335 des Ausgebens wird beispielsweise ausgeführt, wenn die Abweichung zwischen der aktuellen Standortinformation und dem Heimatstandort für die Dauer eines vordefinierten Zeitraums vorliegt.

Das Verfahren 300 umfasst zusätzlich einen Schritt 340 des Ortens des Lagerbehälters unter Verwendung der Funkverbindung.

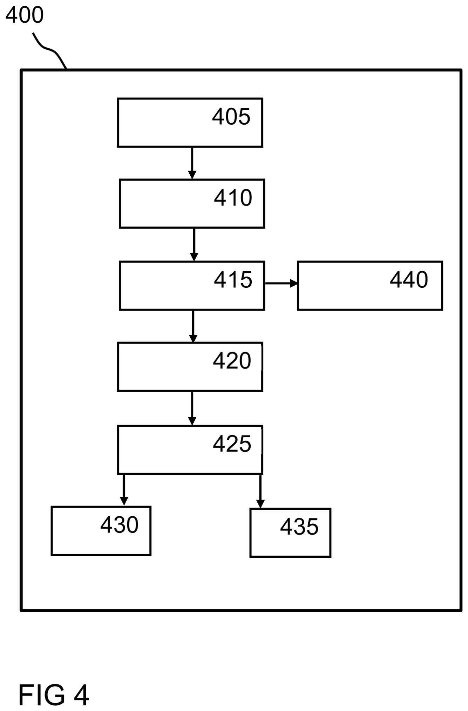

Figur 4 zeigt ein Blockschaltbild eines Ausführungsbeispiels einer Vorrichtung 400 zum Betreiben eines Lagerbehälters. Die Vorrichtung 400 ist ausgebildet, um das Verfahren aus Figur 3 oder ein ähnliches Verfahren anzusteuern oder auszuführen.

Hierzu weist die Vorrichtung 400 eine Einheit 405 zum Aufbauen, eine Einheit 410 zum Bestimmen und eine Einheit 415 zum Übermitteln auf. Die Einheit 405 zum Aufbauen ist ausgebildet, um eine Funkverbindung zwischen dem mobilen Endgerät und dem Lagerbehälter aufzubauen. Die Einheit 410 zum Bestimmen ist ausgebildet, um eine aktuelle Standortinformation durch das mobile Endgerät zu bestimmen. Die Einheit 415 zum Übermitteln ist ausgebildet, um die aktuelle Standortinformation über die Funkverbindung zu dem Lagerbehälter zu übermitteln.

Gemäß einem Ausführungsbeispiel weist die Vorrichtung 400 eine Einheit 420 zum Übertragen auf, um die aktuelle Standortinformation an eine externe Zentraleinrichtung zu übertragen.

Gemäß einem weiteren Ausführungsbeispiel weist die Vorrichtung 400 eine Einheit 425 zum Vergleichen auf, die ausgebildet ist, um die aktuelle Standortinformation mit einem Heimatstandort des Lagerbehälters zu vergleichen, um eine Übereinstimmung zwischen der aktuellen Standortinformation und dem Heimatstandort oder eine Abweichung zwischen der aktuellen Standortinformation und dem Heimatstandort zu ermitteln.

Gemäß einem weiteren Ausführungsbeispiel weist die Vorrichtung 400 eine Einheit 430 zum Ausgeben auf, die ausgebildet ist, um eine Benachrichtigung an ein einem Verleiher des Lagerbehälters zugeordneten Gerät auszugebe, wenn in der Einheit 425 zum Vergleichen die Abweichung zwischen der aktuellen Standortinformation und dem Heimatstandort ermittelt wurde.

Gemäß einem weiteren Ausführungsbeispiel weist die Vorrichtung 400 eine Einheit 435 zum Ausgeben auf, die ausgebildet ist, um eine Benachrichtigung an ein einem Entleiher des Lagerbehälters zugeordneten Gerät auszugeben, wenn in der Einheit 425 zum Vergleichen die Abweichung zwischen der aktuellen Standortinformation und dem Heimatstandort ermittelt wurde.

Die Einheiten 430, 435 zum Ausgeben werden beispielsweise angesteuert, wenn die Abweichung zwischen der aktuellen Standortinformation und dem Heimatstandort für die Dauer eines vordefinierten Zeitraums vorliegt.

Die Vorrichtung 400 weist zusätzlich eine Einheit 440 zum Orten auf, die ausgebildet ist, um den Lagerbehälter unter Verwendung der Funkverbindung zu orten.

## Patentansprüche

1. Lagerbehälter (100) zum Lagern von Lebensmitteln, wobei der Lagerbehälter (100) die folgenden Merkmale aufweist:
eine Speichereinrichtung (115) zum Speichern einer Standortinformation des Lagerbehälters (100); und
eine Kommunikationseinrichtung (120), die ausgebildet ist, um eine Funkverbindung mit mindestens einem mobilen Endgerät (125) aufzubauen, um die Standortinformation zwischen der Speichereinrichtung (115) und dem mobilen Endgerät (125) zu übertragen.

2. Lagerbehälter (100) gemäß Anspruch 1, mit einer Energiequelle zum Bereitstellen elektrischer Energie zum Betreiben der Speichereinrichtung (115).

3. Lagerbehälter (100) gemäß einem der vorangegangenen Ansprüche, wobei die Kommunikationseinrichtung (120) ausgebildet ist, um die in der Speichereinrichtung (115) gespeicherte Standortinformation des Lagerbehälters (100) an das mobile Endgerät (125) auszugeben und/oder um eine aktuelle Standortinformation von dem mobilen Endgerät (125) zu empfangen und in der Speichereinrichtung (115) abzuspeichern.

4. Lagerbehälter (100) gemäß einem der vorangegangenen Ansprüche, wobei die Kommunikationseinrichtung (120) UWB-fähig ausgebildet ist

5. Verfahren (300) zum Betreiben eines Lagerbehälters (100) gemäß einem der Ansprüche 1 bis 4, wobei der Lagerbehälter (100) drahtlos mit mindestens einem mobilen Endgerät (125) koppelbar ist, wobei das Verfahren (300) die folgenden Schritte umfasst
Aufbauen (305) der Funkverbindung zwischen dem mobilen Endgerät (125) und dem Lagerbehälter (100);
Bestimmen (310) der aktuellen Standortinformation durch das mobile Endgerät (125); und
Übermitteln (315) der aktuellen Standortinformation über die Funkverbindung zu dem Lagerbehälter (100).

6. Verfahren (300) gemäß Anspruch 5, mit einem Schritt (320) des Übertragens der aktuellen Standortinformation an eine externe Zentraleinrichtung (130).

7. Verfahren (300) gemäß einem der Ansprüche 5 bis 6, mit einem Schritt (325) des Vergleichens der aktuellen Standortinformation mit einem Heimatstandort (205) des Lagerbehälters (100), um eine Übereinstimmung zwischen der aktuellen Standortinformation und dem Heimatstandort (205) oder eine Abweichung zwischen der aktuellen Standortinformation und dem Heimatstandort (205) zu ermitteln.

8. Verfahren (300) gemäß Anspruch 7, mit einem Schritt (330) des Ausgebens einer Benachrichtigung an ein einem Verleiher (200) des Lagerbehälters (100) zugeordneten Gerät, wenn im Schritt (325) des Vergleichens die Abweichung zwischen der aktuellen Standortinformation und dem Heimatstandort (205) ermittelt wurde.

9. Verfahren (300) gemäß Anspruch 7, mit einem Schritt (335) des Ausgebens einer Benachrichtigung an ein einem Entleiher (210) des Lagerbehälters (100) zugeordneten Gerät, wenn im Schritt (325) des Vergleichens die Abweichung zwischen der aktuellen Standortinformation und dem Heimatstandort (205) ermittelt wurde.

10. Verfahren (300) gemäß einem der Ansprüche 8 oder 9, wobei der Schritt (330, 335) des Ausgebens ausgeführt wird, wenn die Abweichung zwischen der aktuellen Standortinformation und dem Heimatstandort (205) für die Dauer eines vordefinierten Zeitraums vorliegt.

11. Verfahren (300) gemäß einem der Ansprüche 5 bis 10, mit einem Schritt (340) des Ortens des Lagerbehälters (100) unter Verwendung der Funkverbindung.

12. Vorrichtung (400), die ausgebildet ist, um die Schritte des Verfahrens (300) gemäß einem der vorangegangenen Ansprüche 5 bis 11 in entsprechenden Einheiten auszuführen und/oder anzusteuern.

13. System mit einer Vorrichtung gemäß Anspruch 12, mit einer Mehrzahl von Lagerbehältern (100) gemäß einem der Ansprüche 1 bis 4.

14. Computer-Programmprodukt mit Programmcode zur Durchführung des Verfahrens (300) nach einem der Ansprüche 5 bis 11, wenn das Computer-Programmprodukt auf einer Vorrichtung (400) gemäß Anspruch 12 ausgeführt wird.
